(19) Europäisches Patentamt
European Patent Office
Office européen des brevets

(11) **EP 4 712 026 A1**

(12) **EUROPEAN PATENT APPLICATION**
published in accordance with Art. 153(4) EPC

(43) Date of publication:
**18.03.2026 Bulletin 2026/12**

(21) Application number: **24926259.3**

(22) Date of filing: **25.07.2024**

(51) International Patent Classification (IPC):
*G06T 7/80* (2017.01)    *G06T 7/73* (2017.01)
*G06T 7/13* (2017.01)

(86) International application number:
**PCT/CN2024/107539**

(87) International publication number:
**WO 2026/020414 (29.01.2026 Gazette 2026/05)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **SZ Zhuoyu Technology Co., Ltd.
Shenzhen, Guangdong 518055 (CN)**

(72) Inventors:
• **LIU, Tianbo**
 **Shenzhen, Guangdong 518055 (CN)**
• **ZHOU, Xiaolin**
 **Shenzhen, Guangdong 518055 (CN)**

(74) Representative: **Botti & Ferrari S.p.A.
Via Cappellini, 11
20124 Milano (IT)**

(54) **BINOCULAR CAMERA SELF-CALIBRATION METHOD, COMPUTER DEVICE, STORAGE MEDIUM, PROGRAM PRODUCT AND MOBILE PLATFORM**

(57) The present application discloses a binocular camera self-calibration method, a computer device, a storage medium, a program product, and a mobile platform. The binocular camera includes a first camera and a second camera, wherein there is no rigid connection between the first camera and the second camera. The method includes: acquiring a first image captured by the first camera and a second image captured by the second camera; determining whether there is a calibration anomaly between the first camera and the second camera based on the first image and the second image; correcting extrinsic parameters of the first camera and the second camera when it is determined that there is the calibration anomaly between the first camera and the second camera. Due to vibration, temperature changes, and other factors, the extrinsic parameters of the binocular camera without a rigid connection may change, causing errors in the data captured by the binocular camera. The present application addresses this problem by checking for the calibration anomaly of the binocular camera and correcting the extrinsic parameters when the calibration anomaly is determined.

Acquiring a first image captured by the first camera and a second image captured by the second camera — S10

Determining whether there is a calibration anomaly between the first camera and the second camera based on the first image and the second image — S20

Correcting extrinsic parameters of the first camera and the second camera when it is determined that there is the calibration anomaly between the first camera and the second camera — S30

FIG.1

## Description

### FIELD

The present application relates to the technical field of binocular cameras, and more particularly to a binocular camera self-calibration method, a computer device, a storage medium, a program product, and a mobile platform.

### BACKGROUND

Perception sensors are one of the core components of intelligent robots. Intelligent robots include, but are not limited to, intelligent vehicles, wheeled robots, tracked robots, bipedal robots, quadruped robots, and so on.

Taking an intelligent vehicle equipped with automatic driving or advanced driver-assistance functions as an example, perception sensors are primarily responsible for two major tasks: detecting dynamic and static obstacles around the vehicle, and understanding road elements and structures. The detection of dynamic and static obstacle includes the detection of common traffic participants such as vehicles and pedestrians, as well as the detection of unconventional obstacles such as construction roadblocks or fallen branches. The understanding of road element and structure includes the identification and understanding of road infrastructure such as lane lines, traffic lights, road signs, ground arrows, and road topology. Based on the results of environmental perception, the intelligent driving system can then decide "how the vehicle should move". Perception sensors serve as the "eyes" of the intelligent vehicle. In related technologies, binocular cameras are used as the "eyes" of intelligent vehicles. By capturing left and right images through the binocular camera, disparity of each pixel point is obtained, and then three-dimensional information is reconstructed based on the principle of triangulation, so as to identify obstacles.

In the process of implementing this application, the inventors found that the perception performance of a binocular camera is mainly affected by the intrinsic parameters and extrinsic parameters of the binocular camera. Generally, after calibration, the intrinsic parameters of the binocular camera remain unchanged. However, the extrinsic parameters of the binocular camera are prone to change due to external environmental factors (for example, vehicle vibrations, changes in ambient temperature and humidity, etc., can cause changes in the extrinsic parameters of the binocular camera).

In related technologies, in order to ensure the stability of the extrinsic parameters of the binocular camera, a rigid connection structure is used between the two cameras. However, such a rigidly connected binocular camera has the following problems: the rigid connection structure increases the cost of the binocular camera, and if different baseline distances and installation environments for various vehicles are needed, different models of rigidly connected binocular cameras must be manufactured through mold opening; furthermore, rigidly connected binocular cameras are bulky, occupy significant space when installed in vehicles, and lack flexibility in installation.

Therefore, there is an urgent need for a technical solution that can address the above technical problems present in the related art.

### SUMMARY

Embodiments of the present application provide a binocular camera self-calibration method, a computer device, a storage medium, a program product, and a mobile platform for solving at least one of the above technical problems.

In a first aspect, embodiments of the present application provide a binocular camera self-calibration method, wherein the binocular camera includes a first camera and a second camera, with no rigid connection between the first camera and the second camera, the method comprising:

acquiring a first image captured by the first camera and a second image captured by the second camera;
determining whether there is a calibration anomaly between the first camera and the second camera based on the first image and the second image; and
correcting extrinsic parameters of the first camera and the second camera when it is determined that there is the calibration anomaly between the first camera and the second camera.

In some embodiments, determining whether there is a calibration anomaly between the first camera and the second camera based on the first image and the second image includes:
dividing the first image and the second image respectively into a plurality of sub-images; calculating a calibration error value corresponding to the first image and the second image based on an error between matching pixel points in a plurality of sub-images of the first image and a plurality of sub-images of the second image; and determining that there is the calibration anomaly between the first camera and the second camera when the calibration error value exceeds a preset error threshold.

In some embodiments, calculating a calibration error value corresponding to the first image and the second image based on an error between matching pixel points in a plurality of sub-images of the first image and a plurality of sub-images of the second image includes:
calculating a respective plurality of sub-image matching errors based on the matching pixel points in the plurality of sub-images of the first image and the plurality of sub-images of the second image; and determining the calibration error value corresponding to the first image and the second image based on the plurality of sub-image matching errors.

In some embodiments, the binocular camera self-calibration method further includes: determining a predetermined number of pixel points for each sub-image of the first image; and determining a predetermined number of pixel points for each sub-image of the second image;

calculating a respective plurality of sub-image matching errors based on the matching pixel points in the plurality of sub-images of the first image and the plurality of sub-images of the second image includes:
calculating the respective plurality of sub-image matching errors based on the matching pixel points in the predetermined number of pixel points in each sub-image of the first image and the predetermined number of pixel points in each sub-image of the second image.

In some embodiments, determining the calibration error value corresponding to the first image and the second image based on the plurality of sub-image matching errors comprises: calculating an average of the plurality of sub-image matching errors, which is determined as the calibration error value of the first image and the second image.

In some embodiments, before dividing the first image and the second image respectively into a plurality of sub-images, the method further includes determining outlier pixel points in the first image and the second image and filtering out the outlier pixel points.

In some embodiments, determining outlier pixel points in the first image and the second image includes: determining a plurality of pixel point error values of multiple pairs of matching pixel points in the first image and the second image; and determining the outlier pixel points in the multiple pairs of matching pixel points based on the plurality of pixel point error values.

In some embodiments, correcting extrinsic parameters of the first camera and the second camera when it is determined that there is the calibration anomaly between the first camera and the second camera includes:
obtaining an initial rotation matrix corresponding to the first camera and the second camera using epipolar constraint; and searching for a target disparity offset value within a preset disparity offset range using a grid search method for correcting the initial rotation matrix.

In some embodiments, the preset disparity offset range includes n preset disparity offset values; and searching for a target disparity offset value within a preset disparity offset range using a grid search method includes:

for an ith preset disparity offset value, calculating coordinate information of multiple pixel points at two different time points;
for the ith preset disparity offset value, calculating an ith group of error values based on the coordinate information of the multiple pixel points at the two different time points, where i ranges from 1 to n; and
determining the target disparity offset value based on a distribution of a 1st to nth groups of error values.

In some embodiments, for an ith preset disparity offset value, calculating coordinate information of multiple pixel points at two different time points includes:
for the ith preset disparity offset value, calculating first coordinate information of the multiple pixel points at a first time point; and determining second coordinate information of the multiple pixel points at a second time point based on relative pose information of a vehicle at the first and second time points and the first coordinate information.

In some embodiments, determining the target disparity offset value based on a distribution of a 1st to nth groups of error values includes: determining a number of error values less than a preset error threshold among multiple error values in an mth group of error values, where m ranges from 1 to n, to obtain n error value counts; and determining a preset disparity offset value corresponding to a maximum among the n error value counts as the target disparity offset value.

In a second aspect, the present application further provides a computer device, comprising a memory, a processor, and a computer program stored in the memory, wherein the processor executes the computer program to implement steps of the binocular camera self-calibration method of any of the above embodiments.

In some embodiments, the processor executes the computer program to implement the following step: generating a prompt message to remind a user when it is detected that an image captured by the first and/or second camera does not contain valid information.

In some embodiments, the processor executes the computer program to implement the following step: recording changes of the extrinsic parameters of the first camera and the second camera, and generating an extrinsic parameter change curve.

In a third aspect, the present application further provides a computer-readable storage medium storing a computer program or instruction therein, wherein the computer program or instruction, when executed by a processor, implements steps of the binocular camera self-calibration method of any of the above embodiments.

In a fourth aspect, the present application further provides a computer program product including a computer program or instruction, wherein the computer program or instruction, when executed by a processor, implements steps of the binocular camera self-calibration method of any of the above embodiments.

In a fifth aspect, the present application further provides a mobile platform, which is equipped with the computer device of any of the above embodiments.

In some embodiments, the first camera and the second camera are mounted at the front of the mobile platform. A baseline between the first camera and the second camera is determined based on a height and/or width of a detection object.

In some embodiments, a baseline between the first camera and the second camera ranges from 0.2m to 1.2m, and a field of view of the first camera and the second camera is 120°.

The present application implements self-calibration for non-rigidly connected binocular camera. It not only eliminates the need for a rigid connecting structure between the two cameras of the binocular camera, thereby saving costs associated with such a structure, but also reduces the spatial footprint required for binocular camera installation and enhances the flexibility of binocular camera configuration. Meanwhile, by detecting a calibration anomaly in the binocular camera and performing extrinsic parameter correction when the calibration anomaly is determined, it addresses the problem that, due to vibration, temperature changes, and other factors, the extrinsic parameters of the binocular camera without a rigid connection may change, causing errors in the data captured by the binocular camera.

## BRIEF DESCRIPTION OF THE DRAWINGS

To more clearly illustrate the technical solutions of the embodiments of the present application, a brief description of the drawings used in the description of the embodiments is provided below. It is evident that the drawings described below represent some embodiments of the present application. For those of ordinary skill in the art, other drawings can also be obtained based on these drawings without requiring creative efforts.

FIG. 1 is a flowchart of an embodiment of a binocular camera self-calibration method of the present application;

FIG. 2 is a schematic diagram of an alignment determination of two matching points on a first image and a second image in the present application;

FIG. 3 is a flowchart of another embodiment of a binocular camera self-calibration method of the present application;

FIG. 4 is a schematic diagram of an embodiment of sub-image division in the present application;

FIG. 5 is a flowchart of another embodiment of a binocular camera self-calibration method of the present application;

FIG. 6 is a flowchart of yet another embodiment of a binocular camera self-calibration method of the present application;

FIG.7 is a schematic diagram of an embodiment of grid search used in the present application;

FIG. 8 is a schematic diagram of a depth change of feature points at time point t1 and time point t2 in the present application;

FIG. 9 is a schematic diagram of a change in baseline distance and observable length of a cut-in vehicle under a cut-in scenario in the present application;

FIG. 10 is a graph of a change of distance measurement error with depth under different baseline values in the present application;

FIG. 11 is a schematic diagram of an embodiment of a binocular camera self-calibration system of the present application;

FIG. 12 is a schematic diagram of an embodiment of the binocular camera self-calibration method combined with interactive design in the present application; and

FIG. 13 is a structural schematic diagram of an embodiment of a computer device of the present application.

## DETAILED DESCRIPTION

In order to make the purpose, technical solutions and advantages of the embodiments of the present application clearer, the technical solutions in the embodiments of the present application will be described clearly and completely in the following in conjunction with the drawings in the embodiments of the present application. Obviously, the described embodiments are part and not all of the embodiments of the present application. Based on the embodiments in the present application, all other embodiments obtained by a person of ordinary skill in the art without the need for inventive effort shall fall within the scope of protection of the present application. It is to be noted that the embodiments and the features in the embodiments in the present application may be combined with each other in the absence of conflicts.

It should also be noted that, in the present application, the terms "include" and "comprise" not only encompass the listed elements but also include other elements not explicitly listed, as well as elements that are inherent to such processes, methods, articles, or devices. Unless otherwise specified, an element defined by the phrase "comprises..." does not exclude the presence of additional identical elements in the process, method, article, or device that comprises the stated element.

The present application provides a binocular camera self-calibration method. This method can be executed by a computer device to achieve self-calibration of the binocular camera. The computer device may be configured on a mobile platform (for example, a vehicle, robot, unmanned aerial vehicle, etc.). Taking a vehicle as an example, the computer device may be a domain controller of the vehicle. It should be noted that the above is only an example and is not intended to limit the scope of the present application.

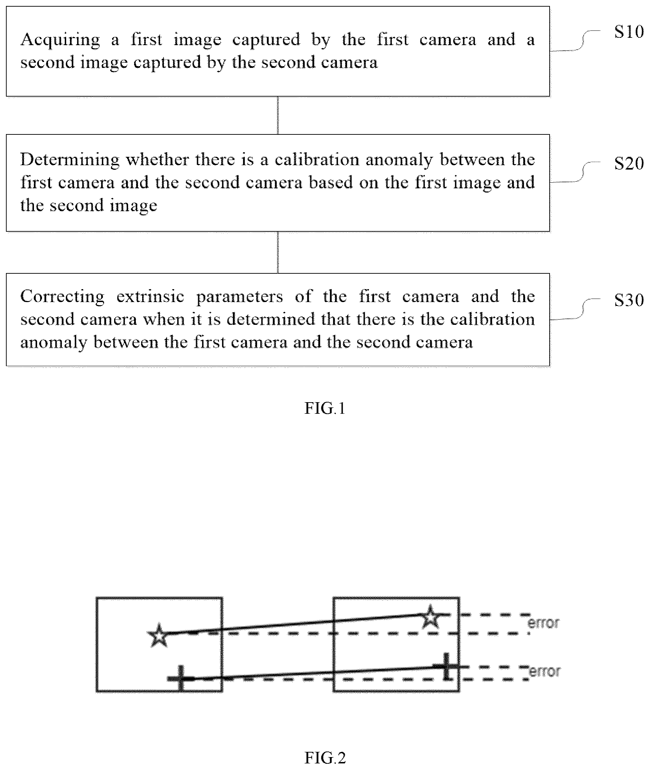

As shown in FIG. 1, an embodiment of the present application provides a binocular camera self-calibration method, wherein the binocular camera includes a first camera and a second camera, and there is no rigid connection between the first camera and the second camera. The binocular camera self-calibration method includes:

S10: acquiring a first image captured by the first camera and a second image captured by the second camera. Here, the first camera may be the left camera, and the second camera may be the right camera. The first camera and the second camera can be independently mounted at the front of the vehicle to capture the scene in front of the vehicle and obtain depth information of objects (for example, vehicles ahead, pedestrians, lane lines, signs, and curbs) in the forward scene, for use in advanced assistant driving or automatic driving. The first image and the second image are captured simultaneously from the respective perspectives of the first and second cameras.

S20: determining whether there is a calibration anomaly between the first camera and the second camera based on the first image and the second image. By way of example, determining whether there is a calibration anomaly between the first camera and the second camera is based on the alignment of matching points in the first image and the second image. If the alignment of matching points in the first and second images indicates that the calibration error between the first and second images exceeds a preset error threshold, it is determined that there is a calibration anomaly between the first and second cameras. If the alignment of matching points in the first and second images indicates that the calibration error between the first and second images does not exceed the preset error threshold, it is determined that the calibration between the first and second camera is normal.

As shown in FIG. 2, it is a schematic diagram of determining the alignment of two matching points on the first and second images in the present application. Here in FIG. 2, the rectangle on the left represents the first image, which contains two pixel points represented by a pentagram and a cross. The rectangle on the right represents the second image, also containing two pixel points represented by a pentagram and a cross. The two pentagrams in the first and second images correspond to two pixel points as one pair of matching pixel points, and the two crosses in the first and second images correspond to two pixel points as another pair of matching pixel points. As can be seen in FIG. 2, the two pairs of matching pixel points have an error 'error' in a Y-axis direction (vertically in the figure). Taking a pixel point p1(x1, y1) represented by the pentagram in the first image and a pixel point p2(x2, y2) represented by the pentagram in the second image as an example, if a y-difference between points p1 and p2, i.e., |y1 - y2|, is less than 0.5 pixels, it indicates that the first and second images are aligned in the Y direction. Otherwise, it indicates that the first and second images are not aligned, and thus the calibration anomaly between the first and second cameras is determined.

S30: correcting extrinsic parameters of the first camera and the second camera when the calibration anomaly between the first camera and the second camera is determined. For example, the extrinsic parameters of the first and second cameras include a rotation matrix between the first and second cameras. When the calibration anomaly between the first and second cameras is determined, the rotation matrix between the first and second cameras is corrected accordingly.

The method in the embodiment of the present application realizes self-calibration of the binocular camera without rigid connection. On one hand, the absence of a rigid connection structure between the two cameras of the binocular camera reduces the cost of such structure and also reduces the spatial footprint for the installation of the binocular camera, thereby improving the flexibility of deployment of the binocular camera. At the same time, by detecting the calibration anomaly in the binocular camera and performing extrinsic parameter correction when the calibration anomaly is determined, it addresses the problem that, due to vibration, temperature changes, and other factors, the extrinsic parameters of the binocular camera without a rigid connection may change, causing errors in the data captured by the binocular camera.

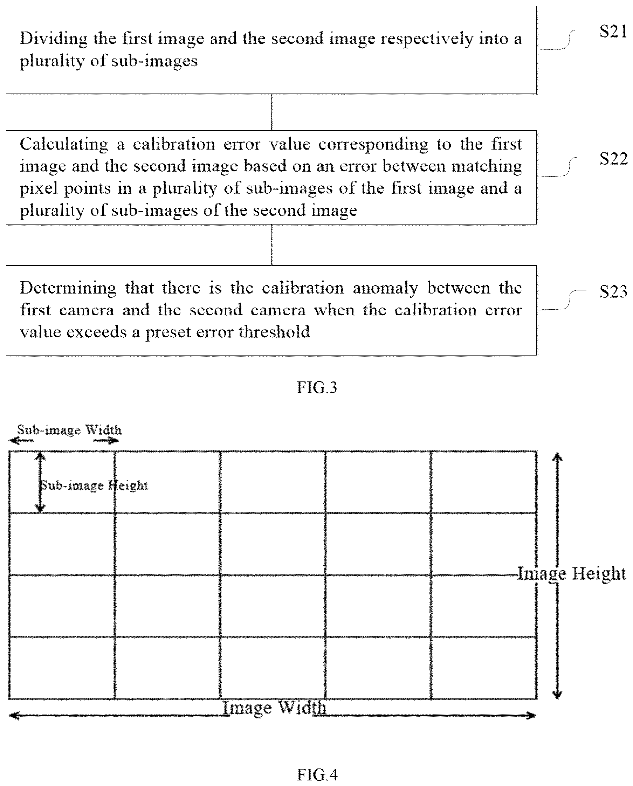

As shown in FIG. 3, it is a flowchart of another embodiment of the binocular camera self-calibration method of the present application. Here, determining whether there is a calibration anomaly between the first camera and the second camera based on the first image and the second image includes:

S21: dividing the first image and the second image respectively into a plurality of sub-images.

For example, the first and second images are respectively divided into a plurality of sub-images according to a predetermined size. As shown in FIG. 4, it is a schematic diagram of an embodiment of sub-image division in the present application. The image is divided into 5*4 matrixes by width and height in FIG. 4. Here, the predetermined size can be defined by a predetermined width and height (e.g., the predetermined width corresponds to 30 pixel points, and the predetermined height corresponds to 40 pixel points), but this is not limited in the present application.

S22: calculating a calibration error value corresponding to the first image and the second image based on an error between matching pixel points in a plurality of sub-images of the first image and a plurality of sub-images of the second image. By way of example, a respective plurality of sub-image matching errors is calculated based on the matching pixel points in the plurality of sub-images of the first image and the plurality of sub-images of the second image. The calibration error value corresponding to the first image and the second image is determined based on the plurality of sub-image matching errors (e.g., an average of the plurality of sub-image matching errors is calculated, which is determined as the calibration error value of the first image and the second image).

For example, the first image is the left-eye image and the second image the right-eye image. Correspondingly, the plurality of sub-images of the first image includes a plurality of left-eye sub-images, and the plurality of sub-images of the second image includes a plurality of right-eye sub-images. Further, taking a first left-eye sub-image in the plurality of left-eye sub-images and a first right-eye sub-image in the plurality of right-eye sub-images as an example, a plurality of error values between multiple pairs of matching pixel points in the first left-eye sub-image and the first right-eye sub-image is calculated (here, the calculation method for the error values between matching pixel points can refer to the error calculation method for two pairs of matching pixel points in the Y-axis direction in the previous embodiment). The average of the plurality of error values is then taken as the matching error of the first left-eye sub-image and the first right-eye sub-image. Then, the matching error values corresponding to the remaining sub-images in the plurality of left-eye sub-images and the plurality of right-eye sub-images are calculated in the same manner.

S23: determining that there is a calibration anomaly between the first camera and the second camera when the calibration error value exceeds a preset error threshold.

In the embodiment of the present application, the overall image (the first and second images) is divided into a plurality of sub-images. Then, the calibration error is determined based on the matching pixel points in the sub-images, so as to determine whether there is the calibration anomaly between the first and second cameras, which improves the accuracy of the determination.

In some embodiments, the binocular camera self-calibration method further includes: determining a predetermined number of pixel points for each sub-image of the first image; and determining a predetermined number of pixel points for each sub-image of the second image. For example, the method to determine a predetermined number of pixel points for each sub-image of the first image includes the following steps.

Taking a first sub-image of the first image as an example, a pixel point from the first image is obtained and whether the pixel point falls within a first sub-image region of the first image is determined.

If the pixel point does fall within the region, whether the number of pixel points already falling within the first sub-image region has reached a predetermined number is determined. If the number has not reached the predetermined number, the pixel point is determined as a pixel point in the first sub-image region. If the number has reached the predetermined number, one pixel point is selected and removed from the pixel points already falling within the first sub-image region, and the aforesaid pixel point is determined as a pixel point in the first sub-image region;

if the pixel point does not fall within the region, a next pixel point is retrieved from the first image and processed in the same way;

once the predetermined number of pixel points for the first sub-image of the first image is collected, the same process is used successively to collect the predetermined number of pixel points for the remaining sub-images in the first image.

Exemplarily, a bucket collector is used to implement the above-described process of screening and collecting pixel points, specifically as follows: the bucket collector divides the original image into multiple small regions (buckets). When a pixel point falls into a certain region, it will be attempted to be added to the bucket corresponding to that region. If the bucket is not full, the pixel point is placed into the bucket. If the bucket is already saturated (for example, the number of pixel points added to the bucket has reached a predetermined number), the retention probability of the pixel point is calculated: $p_{in}=N_{max}/N_{add}$, where $N_{max}$ is the maximum capacity of the bucket, and $N_{add}$ is the total number of pixel points that have attempted to be added to the bucket, both of which are adjustable parameters derived from balance among algorithm results, memory, and computational power. For a given bucket, $N_{max}$ is a fixed value, and $N_{add}$ is obtained based on historical statistics. A floating-point number between 0 and 1 is randomly generated (for example, using a uniform distribution to generate a random number, which can be implemented based on the standard libraries of the corresponding programming language, not limited by this application). If it is less than the retention probability $p_{in}$, a pixel point is randomly selected from the already stored pixel points in the bucket and deleted, then the new pixel point replaces the deleted one. In this way, a random distribution of the pixel points collected over the time domain can be ensured.

Correspondingly, calculating a respective plurality of sub-image matching errors based on the matching pixel points in the plurality of sub-images of the first image and the plurality of sub-images of the second image includes:

calculating the respective plurality of sub-image matching errors based on the matching pixel points in the predetermined number of pixel points in each sub-image of the first image and the predetermined number of pixel points in each sub-image of the second image.

Exemplarily, the first image is the left-eye image and the second image the right-eye image. Correspondingly, the plurality of sub-images of the first image includes a plurality of left-eye sub-images, and the plurality of sub-images of the second image includes a plurality of right-eye sub-images. Further, taking a first left-eye sub-image in the plurality of left-eye sub-images and a first right-eye sub-image in the plurality of right-eye sub-images as an example, a plurality of error values between multiple pairs of matching pixel points in the predetermined number of pixel points in the first left-eye sub-image and the predetermined number of pixel points in the first right-eye sub-image is calculated (here, the calculation method for the error values between matching pixel points can refer to the error calculation method for two pairs of matching pixel points in the Y-axis direction in the previous embodiment). The average of the plurality of error values is then taken as the matching error of the first left-eye sub-image and the first right-eye sub-image. Then, the matching error values corresponding to the remaining sub-images in the plurality of left-eye sub-images and the plurality of right-eye sub-images are calculated in the same manner.

During the implementation of the present application, the inventors found that when obtaining Harris feature points from the first image and the second image and using the KLT (Kanade-Lucas-Tomasi) tracking algorithm to obtain matching feature points (e.g., matching pixel point pairs between the left-eye and right-eye) from the first image and the second image, noise matching feature points are introduced. The conventional method is to use fundamental RANSAC (Random Sample Consensus, an iterative algorithm used to estimate parameters of a mathematical model from a data set containing outliers, commonly applied in computer vision and robotics, such as image registration, 3D reconstruction, etc.). However, this method has long runtime and occupies resources. To avoid the influence of the above-described noise matching feature point on the accuracy of determining whether there is the calibration anomaly between the first camera and the second camera, the inventors propose the following solution:
before dividing the first image and the second image respectively into a plurality of sub-images, the following steps are performed: determining outlier pixel points in the first image and the second image and filtering out the outlier pixel points. Exemplarily, a plurality of pixel point error values of multiple pairs of matching pixel points in the first image and the second image is determined. The outlier pixel points in the multiple pairs of matching pixel points are determined based on the plurality of pixel point error values.

Exemplarily, since the intrinsic parameters of the sensor can be considered already calibrated, and the extrinsic parameter changes caused by vehicle vibrations are generally not too large, a randomly selected pixel point error value of one pair of matching pixel points is taken as a central error, and the differences between this central error and the pixel point error values of all other matching pixel points are determined. If the differences are within a certain range, the points are considered inliers. For example, there are three pairs of left-eye and right-eye matching pixel points: (pl1, pr1), (pl2, pr2), (pl3, pr3); where the error of (pl1, pr1) is the y-difference y1 between pl1 and pr1, the error of (pl2, pr2) is the y-difference y2 between pl2 and pr2, and the error of (p13, pr3) is the y-difference y3 between pl3 and pr3. The y-difference y1 of (pl1, pr1) is randomly selected as the central error. Then the differences between y2 and y1, and y3 and y1 are determined. If these differences fall within a certain range, the corresponding matching pixel point pairs are considered inliers; otherwise, they are considered outliers. Finally, the state when the number of inliers is the highest is selected as the final inlier points. For example, when the y-difference y2 of (pl2, pr2) is selected as the central error, and 300 of all other matching pixel points are determined as inliers, while 100 are outliers, the y-difference y2 of (pl2, pr2) is finally selected as the central error, and all matching pixel points with a difference within a certain range from y2 are taken as the final inlier points (a total of 301).

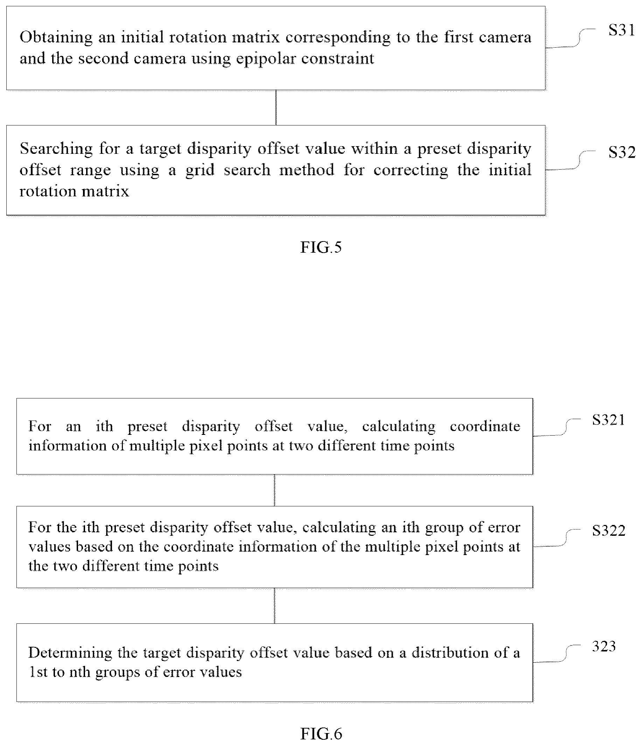

FIG. 5 is a schematic flowchart of another embodiment of the binocular camera self-calibration method of the present application. Here, correcting extrinsic parameters of the first camera and the second camera when it is determined that there is the calibration anomaly between the first camera and the second camera includes:

S31: obtaining an initial rotation matrix corresponding to the first camera and the second camera using epipolar constraint.
S32: searching for a target disparity offset value within a preset disparity offset range using a grid search method for correcting the initial rotation matrix.

Regarding step S31, exemplarily, binocular stereo track points are used, and an initial rotation matrix R of the first and second cameras is obtained using epipolar constraint. This calibration result can minimize the epipolar line error. However, convergence in the disparity direction (yaw for horizontal disparity, pitch for vertical disparity) is poor (since cost is not sensitive to it), thus requiring the grid search in the next step to optimize the disparity direction deviation. Here, pitch refers to the angle between the optical axis and the ground when the camera is installed. When the camera is mounted facing forward, the pitch is 0.

After correcting the binocular image, the left-eye and right-eye feature points satisfy the following epipolar constraint: $x_0^T E x_1 = 0$, where $x_0$, $x_1$ are the normalized coordinates of the matching points of the left-eye and the right-eye, respectively. The binocular coordinate relationship is: $x_1=Rx_0+t$. The essential matrix is: $E=[t_X]R$, where $[t_X]$ denotes the skew-symmetric matrix corresponding to the translation vector. Applying the epipolar constraint to the left-eye and right-eye yields:

$$x_1^T[t_X]Rx_0 = 0, \quad x_0^T R^T [t_X] x_1 = 0 \quad (1)$$

Let $x_0^{'T} = x_0^T[t_X], \quad x_1^{'} = [t_X]x_1$, and substitute them into equation (1) to obtain:

$$x_1^{'} Rx_0 = 0 \ , x_0^T R^T x_1^{'} = 0$$

The present application designs the following optimization problem, geometrically meaning to optimize the perpendicular distance from points to lines:

$$\arg \min_{R} \sum_{i=0}^{n} \frac{||x_{i1}^{'T} Rx_{i0}||^2}{||Rx_{i0}||_1^2 + ||Rx_{i0}||_2^2} + \frac{||x_{i0}^T R^T x_{i1}^{'}||^2}{||R^T x_{i1}^{'}||_1^2 + ||R^T x_{i1}^{'}||_2^2}$$

Because the norm of a matrix is invariant after rotation of the matrix, R can be eliminated in the denominator, simplifying the expression to optimizing e:

$$e = \arg \min_{R} \frac{1}{2} \sum_{i=0}^{n} ||e_i||^2 = \arg \min_{R} \frac{1}{2} \sum_{i=0}^{n} ||x_{i1}^{'T} Rx_{i0}||^2 (\frac{1}{||x_{i0}||_1^2 + ||x_{i0}||_2^2} + \frac{1}{||x_{i1}^{'}||_1^2 + ||x_{i1}^{'}||_2^2})$$

The residual for the ith observation point is:

$$e_i = \frac{1}{2} ||x_{i1}^{'T} Rx_{i0}||^2 (\frac{1}{||x_{i0}||_1^2 + ||x_{i0}||_2^2} + \frac{1}{||x_{i1}^{'}||_1^2 + ||x_{i1}^{'}||_2^2})$$

The problem is solved using Ceres (an open-source tool for solving nonlinear optimization problems), which results in relatively high CPU load. The analytical form of the Jacobian matrix is given below:

$$\frac{\partial e_i}{\partial R} = (x_{i1}^{'T} \hat{R} x_{i0})(-x_{i1}^{'T}[\hat{R}x_{i0}]_X) \frac{1}{||x_{i0}||_1^2 + ||x_{i0}||_2^2} + \frac{1}{||x_{i1}^{'}||_1^2 + ||x_{i1}^{'}||_2^2})$$

The geometric meaning of the above optimization objective function is the perpendicular distance from feature points to the epipolar lines. Solving this optimization objective function yields the initial rotation matrix R. Even if yaw deviation occurs between the left-eye and the right-eye, the epipolar lines can still be aligned, meaning the objective function is not sensitive to it. Therefore, solely relying on epipolar optimization cannot accurately calibrate yaw rotation. Hence, the grid search method is used to search for the target disparity offset value within a preset disparity offset range for correcting the initial rotation matrix.

As shown in FIG. 6 which is a flow diagram of another embodiment of the binocular camera self-calibration method of the present application, the preset disparity offset range includes n preset disparity offset values. In this embodiment, step S32 for searching for a target disparity offset value within a preset disparity offset range using a grid search method includes:

S321: for an ith preset disparity offset value, calculating coordinate information of multiple pixel points at two different time points.

For example, for the ith preset disparity offset value, the first coordinate information of the multiple pixel points at a first time point is calculated. The second coordinate information of the multiple pixel points at a second time point is determined based on relative pose information of a vehicle equipped with the binocular camera at the first and second time points and the first coordinate information.

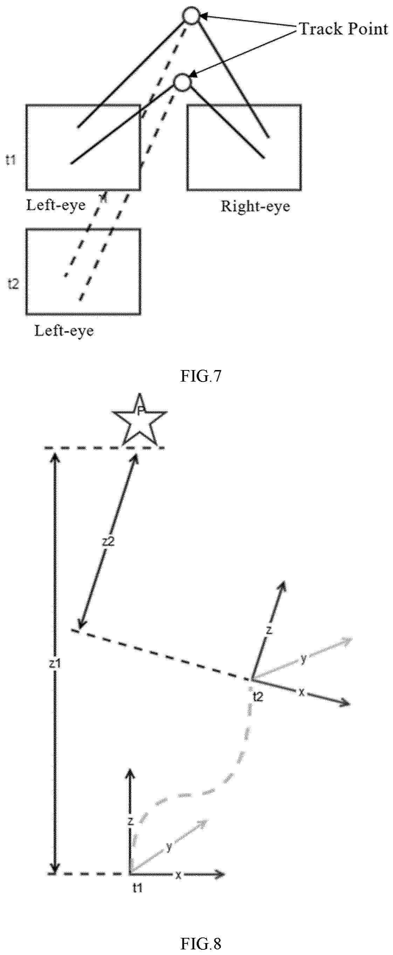

FIG. 7 is a schematic diagram of an embodiment of grid search used in the present application. Multiple groups of 3-frame images as shown in FIG. 7 are collected. A disparity shift is searched within a range by grid search. For each disparity shift, the 3D coordinates of track points at time point t1 can be computed through triangulation, then projected to the left-eye at time point t2, and the number of inliers is calculated. The disparity shift with the most inliers is ultimately selected as the optimal disparity shift, thereby determining the final binocular R.

Here, the grid search is a parameter tuning method: among all candidate parameter options, each possibility is tried in an exhaustive loop. The best-performing parameter is chosen as the final result. Its principle is similar to finding the maximum value in an array (it is called grid search because, taking a model with two parameters as an example, if parameter a has 3 values and parameter b has 4 values, all combinations are listed, forming a 3*4 table. Each cell in the table is a grid, and the loop process is like traversing and searching each grid, hence the name 'grid search').

S322: for the ith preset disparity offset value, calculating an ith group of error values based on the coordinate information of the multiple pixel points at the two different time points, where i ranges from 1 to n; and

S323: determining the target disparity offset value based on a distribution of a 1st to nth groups of error values.

As an example, a number of error values less than a preset error threshold is determined among multiple error values in an mth group of error values, where m ranges from 1 to n, to obtain n error value counts. The preset disparity offset value corresponding to a maximum among the n error value counts is determined as the target disparity offset value.

In some embodiments, assuming the binocular baseline has already been aligned using the epipolar constraint, but there exists a bias in the disparity direction, the following formula is considered for calculating the bias: $bf/(d1+bias)-bf/(d2+bias)=\delta z$.

For example, b is the baseline length of the binocular camera, f is the focal length of the binocular camera, the disparity of a feature point is d1, and after the vehicle moves a certain distance, the disparity becomes d2, and $\delta z$ is the depth change of the point. When the vehicle moves in a perfectly straight line, $\delta z$ can be simply regarded as the movement distance of the vehicle.

By continuously tracking feature points and supplementing new ones, multiple groups of $(d1, d2, \delta z)$ can be obtained. Each group of such observations can be used to compute a bias. A distribution of the biases is then analyzed to select the most probable value.

As shown in FIG. 8, it is a schematic diagram of a depth change of feature points at time point t1 and time point t2 in the present application. For example, the depth change $\delta z$ of a feature point can be obtained as follows:

using the original binocular calibration parameters to calculate the 3D coordinate (obtaining z1) of feature point P at time point t1, and using a relative pose between t1 and t2 and projecting it to time point t2 to obtain the 3D coordinate (obtaining z2) at time point t2, thereby obtaining $\delta z$.

As an example, for a selected disparity shift, the common triangulation method in computer vision can be used to obtain the 3D coordinate of the point at time point t1. Then, using the motion information of the vehicle between time point t1 and time point t2, the 3D coordinate at time point t1 is converted to that at time point t2. Then, the projected 3D coordinate of the point at time point t2 is compared with the 2D coordinate obtained by the KLT algorithm to compute the error value.

For example, supposing there are 100 points, and 10 candidate disparity shifts are selected. After enumeration, it is found that 90 points have the minimum error when disparity shift = X1; 5 points have minimum error when disparity shift = X2, and the rest have minimum error when disparity shift = X3, X4, ... Then, disparity shift = X1 is determined to be the correct value.

In some embodiments, the present application also provides a computer device, including a memory, a processor, and a computer program stored in the memory. The processor executes the computer program to implement steps of the binocular camera self-calibration method in any of the above-described embodiments.

In some embodiments, the processor executes the computer program to perform the following step: generating a prompt message to remind a user when it is detected that an image captured by the first and/or second camera does not contain valid information. In this embodiment, when the camera lens is obscured due to rain, smog, etc., and not cleaned by the driver in time, resulting in images without valid information, the system will extract information from the image quality monitoring module and remind the user to clean the lens in time. Exemplarily, valid information may include detectable objects in the image (e.g., vehicles ahead, pedestrians, lane lines, road signs, curbs, etc.). Accordingly, when none of these detectable objects appear in the image captured by the first and/or second camera, it is considered that the image does not contain valid information, indicating the lens of the first and/or second camera may be dirty or blocked and needs cleaning.

In some embodiments, the processor executes the computer program to perform the following step: recording changes of the extrinsic parameters of the first camera and the second camera, and generating an extrinsic parameter change curve.

The self-calibration computer device for the binocular camera with no rigid connection in the present application can monitor calibration error in real time. For example, after one day of vehicle operation, minor changes in extrinsic parameters in the binocular cameras may occur due to vibrations, temperature fluctuations, or other factors. The present application can detect and perform self-calibration in a short period (e.g., detect changes within 0.1 seconds and complete self-calibration within 0.5 seconds), update the calibration parameters to ensure system functionality, record the extrinsic parameter changes, and display the extrinsic parameter change curve on the HMI (Human-Machine Interface).

In some embodiments, the present application further provides a computer-readable storage medium storing a computer program or instruction therein, wherein the computer program or instruction, when executed by a processor, implements the steps of the binocular camera self-calibration method in any of the above-described embodiments.

In some embodiments, the present application also provides a computer program product comprising a computer program or instruction, wherein the computer program or instruction, when executed by a processor, implements the steps of the binocular camera self-calibration method in any of the above-described embodiments.

In some embodiments, the present application also provides a mobile platform, which is equipped with the computer device of any of the above-described embodiments.

In some embodiments, the first camera and the second camera are mounted at the front of the mobile platform. For example, in the case where the mobile platform is a vehicle, the first camera and the second camera are mounted on the windshield of the vehicle.

In some embodiments, the baseline between the first camera and the second camera is determined based on a height and/or width of a detection object.

In some embodiments, the baseline between the first camera and the second camera ranges from 0.2m to 1.2m, and a field of view of the first camera and the second camera is 120°.

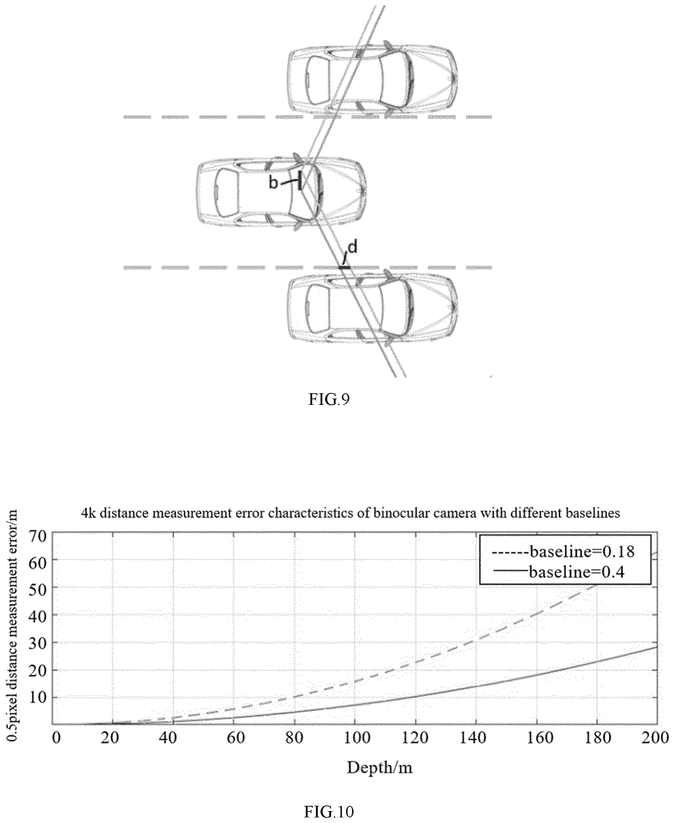

As shown in FIG. 9, it is a schematic diagram of a change in baseline distance and observable length of a cut-in vehicle under a cut-in scenario in the present application. By way of example, the installation design constraints of the non-rigid binocular camera in the present application will be described with reference to FIG. 9.

The baseline range of the non-rigid binocular camera may be 0.2m to 1.2m. Compared to the current integrated installation method, the left camera is offset leftward by a maximum of b = 0.51m, and both the left and right cameras have a field of view FOV = 120°.

Here, when b = 0.51m (baseline = 1.2m), it can be calculated that the observable length of the right-side vehicle decreases by d=b*tan(30°)=0.30m. Similarly, the observable length of the left-side vehicle increases by d = 0.30m. Assuming the cut-in vehicle just touches the lane line, the lateral distance to the center of the current lane is 3.75m/2 = 1.875m. When the front of the right-side cut-in vehicle is 1m from the front of the host vehicle, the observable vehicle length reduces from 1.85m to 1.55m. When the front of the right-side cut-in vehicle is 1.5m from the front of the host vehicle, the observable vehicle length reduces from 2.35m to 2.05m.

When b = 0.11m (baseline = 0.4m), it can be calculated that the observable length of the right-side vehicle decreases by d=b*tan(30°)=0.06m. Similarly, the observable length of the left-side vehicle increases by d = 0.06m. Assuming the cut-in vehicle just touches the lane line, the lateral distance to the center of the current lane is 3.75 m/2 = 1.875m. When the front of the right-side cut-in vehicle is 1m from the front of the host vehicle, the observable vehicle length reduces from 1.85m to 1.79m. When the front of the right-side cut-in vehicle is 1.5m from the front of the host vehicle, the observable vehicle length reduces from 2.35m to 2.29m.

Furthermore, based on the above installation position design analysis, it can be concluded that the lateral position of the binocular camera has very little effect on perception range capability. In some embodiments, a point cloud level object is detected, which should satisfy the following conditions:

```
struct obstacle {
float Δy; // object height
float Δx; // object width
} obs;
float h = 1.554f; // intercept from camera optical center to ground
float λ = 1.5f; // saliency control coefficient for detection
float p = 1.5f; // minimum detectable pixel size of binocular camera, corresponding to detection capability of the
binocular camera;

•
```

$$Z = \frac{fb\Delta y}{\lambda h} \quad (1)$$

obstacle segmentation capability

•

$$Z <= \frac{f*\min(\Delta y, \Delta x)}{p} \quad (2)$$

binocular detection capability

Wherein, b is the baseline length of the binocular camera, f is the focal length of the binocular camera, $\lambda$ is the obstacle detection threshold (determined by the detection algorithm, not limited by the present application).

Combining the two formulas yields: $b <= \frac{\lambda h * \min(\Delta y, \Delta x)}{p \Delta y} < \frac{\lambda h}{p} = 0.46$, and when the object is "slender" such as a delineator post or a single traffic cone, the detection distance is further limited by formula (2). Regarding binocular detection capability, assuming the cone has a length-to-width ratio of 3:1, then when the baseline exceeds 0.153m, increasing the baseline further will theoretically not improve obstacle detection capability. Considering that the mechanical installation cannot ensure zero pitch and taking into account the value of $\lambda$, the practical installation baseline can be in the range of 0.4 to 0.6m.

As shown in FIG. 10, it is a graph of a change of distance measurement error with depth under different baseline values in the present application. FIG. 10 shows two curves for baseline values of 0.4m and 0.18m, respectively. The curve with the smaller slope corresponds to the baseline of 0.4m, and the one with the larger slope corresponds to the baseline of 0.18m.

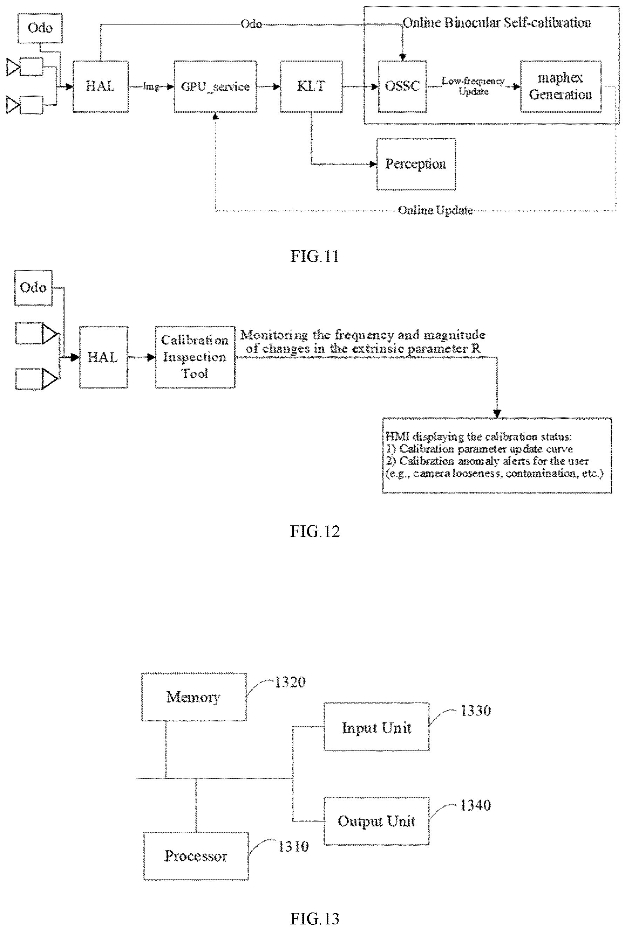

As shown in FIG. 11, it is a schematic diagram of an embodiment of a binocular camera self-calibration system of the present application. The system includes:

a wheel speed sensor (Odo) configured to calculate the moving distance $\delta z$ of the vehicle based on detected wheel speed data;
a first camera and a second camera configured to capture image data;
a camera driver and wheel speed sensor data forwarding module (HAL) configured to transmit data from the sensor to the inside of the system;
a gpu_service configured to convert the raw image data into a format usable by the algorithm;
a feature point extraction and tracking module (KLT, wherein the output of KLT is shared by a calibration module and a perception module) configured for feature point extraction and tracking in image data;
an OSCC module configured to execute the binocular camera self-calibration method of the present application;
an Maphex-generation (input thereof is the updated extrinsic parameters of the binocular camera from the OSCC module, and output is a binocular undistortion lookup table that is updated online to the gpu_service) configured to serve the gpu_service (the gpu_service and the undistortion lookup table are used to pre-process the image; the specific pre-processing method may refer to related prior art and is not limited by the present application); and
a perception module configured to calculate depth based on the output result of the KLT module.

As shown in FIG. 12, which is a schematic diagram of an embodiment of the binocular camera self-calibration method combined with interactive design in the present application, a calibration inspection tool module is used to perform the binocular camera self-calibration method as described in the foregoing embodiments of the present application and to display, via the HMI, information such as the frequency and magnitude of changes in the extrinsic parameters R of the binocular camera monitored. The display modes include, but are not limited to, an update curve of the calibrated extrinsic parameters R and user alerts for calibration anomalies (e.g., due to camera contamination, loosening, etc.).

It should be noted that, for the foregoing method embodiments, a series of actions have been described in a combined manner for the sake of simplicity. However, those skilled in the art should understand that the present application is not limited by the described sequence of actions, since, depending on the present application, some steps may be performed in a different order or concurrently.

FIG. 13 is a schematic diagram of the hardware structure of a computer device for performing the binocular camera self-calibration method, as provided in another embodiment of the present application. As shown in FIG. 13, the device includes:

one or more processors 1310 and a memory 1320, taking a single processor 1310 as an example in FIG. 13. The device for executing the binocular camera self-calibration method may also include: an input unit 1330 and an output unit 1340.

Processor 1310, memory 1320, input unit 1330, and output unit 1340 may be connected via a bus or by other means. In FIG. 13, a bus connection is taken as an example.

Memory 1320, as a non-volatile computer-readable storage medium, may be used to store non-volatile software programs, non-volatile computer-executable programs, and modules, such as the program instructions/modules corresponding to the binocular camera self-calibration method in the embodiments of the present application. Processor 1310 executes various functions and data processing operations of the server by running the non-volatile software programs, instructions, and modules stored in memory 1320, thereby implementing the binocular camera self-calibration method described in the foregoing method embodiments. Memory 1320 may include a program storage area and a data storage area, wherein the program storage area may store an operating system and at least one application required for functionality; the data storage area may store data created during use of the binocular camera self-calibration device. In addition, memory 1320 may include high-speed RAM as well as non-volatile memory such as at least one disk storage device, flash memory device, or other non-volatile solid-state storage device. In some embodiments, memory 1320 may optionally include memory that is located remotely relative to processor 1310; such remote memory may be connected to the binocular camera self-calibration device via a network. Examples of such networks include, but are not limited to, the Internet, intranets, LANs, mobile communication networks, or any combination thereof.

Input unit 1330 may receive digital or character information input and generate signals related to user settings and function control for the binocular camera self-calibration device. Output unit 1340 may include display screens or other display devices.

The one or more modules stored in memory 1320, when executed by the one or more processors 1310, perform the binocular camera self-calibration method of any of the foregoing method embodiments.

The product described above is capable of executing the method provided in the embodiments of the present application and includes the functional modules and beneficial effects corresponding to the method. Technical details not described in detail in this embodiment may be found in the method embodiments provided in the present application.

The computer device in the embodiments of the present application may exist in various forms, including but not limited to:

(1) Mobile communication devices: these devices are characterized by having mobile communication functions and are mainly aimed at providing voice and data communication. These terminals include smartphones (e.g., iPhone), multimedia phones, feature phones, and entry-level phones, etc.

(2) Ultra-mobile personal computer devices: these devices fall under the category of personal computers, with computing and processing capabilities, and generally also have mobile internet access features. Such terminals include PDAs, MIDs, UMPC devices, etc., for example, iPad.

(3) Servers: devices that provide computing services. The configuration of a server includes a processor, hard disk, memory, system bus, etc. Servers are similar to general computer architectures but have higher requirements in processing power, stability, reliability, security, scalability, and manageability due to the need to provide high-reliability services.

(4) Other electronic devices with data interaction functions.

From the description of the above embodiments, those skilled in the art can clearly understand that each embodiment can be implemented using a combination of software and general-purpose hardware platforms, and of course, can also be implemented by hardware. Based on such understanding, the essence of the above technical solutions or the parts that contribute to the related technology can be embodied in the form of a software product. The computer software product can be stored in a computer-readable storage medium, such as ROM/RAM, magnetic disk, optical disk, etc., and includes several instructions to cause a computer device (which may be a personal computer, server, network device, etc.) to execute the method described in the embodiments or portions thereof.

Finally, it should be noted that the above embodiments are merely used to illustrate the technical solutions of the present application, and are not intended to limit them. Although the present application is described in detail with reference to the foregoing embodiments, it should be understood by those of ordinary skill in the art that modifications may still be made to the technical solutions described in the foregoing embodiments, or equivalent substitutions may be made to some of the technical features. Such modifications or substitutions do not depart from the scope of the technical solutions of the embodiments of the present application.

**Claims**

1.  A binocular camera self-calibration method, wherein the binocular camera comprises a first camera and a second camera, with no rigid connection therebetween, the method comprising:

    acquiring a first image captured by the first camera and a second image captured by the second camera;
    determining whether there is a calibration anomaly between the first camera and the second camera based on the first image and the second image; and
    correcting extrinsic parameters of the first camera and the second camera when it is determined that there is the calibration anomaly between the first camera and the second camera.

2.  The method according to claim 1, wherein determining whether there is a calibration anomaly between the first camera and the second camera based on the first image and the second image comprises:

    dividing the first image and the second image respectively into a plurality of sub-images;
    calculating a calibration error value corresponding to the first image and the second image based on an error between matching pixel points in a plurality of sub-images of the first image and a plurality of sub-images of the second image; and
    determining that there is the calibration anomaly between the first camera and the second camera when the calibration error value exceeds a preset error threshold.

3.  The method according to claim 2, wherein calculating a calibration error value corresponding to the first image and the second image based on an error between matching pixel points in a plurality of sub-images of the first image and a plurality of sub-images of the second image comprises:

    calculating a respective plurality of sub-image matching errors based on the matching pixel points in the plurality of sub-images of the first image and the plurality of sub-images of the second image; and
    determining the calibration error value corresponding to the first image and the second image based on the plurality of sub-image matching errors.

4.  The method according to claim 3, further comprising: determining a predetermined number of pixel points for each sub-image of the first image; and determining a predetermined number of pixel points for each sub-image of the second image, and
    calculating a respective plurality of sub-image matching errors based on the matching pixel points in the plurality of sub-images of the first image and the plurality of sub-images of the second image comprises:
    calculating the respective plurality of sub-image matching errors based on the matching pixel points in the predetermined number of pixel points in each sub-image of the first image and the predetermined number of pixel points in each sub-image of the second image.

5.  The method according to claim 3 or 4, wherein determining the calibration error value corresponding to the first image and the second image based on the plurality of sub-image matching errors comprises: calculating an average of the plurality of sub-image matching errors, which is determined as the calibration error value of the first image and the second image.

6.  The method according to any one of claims 2-4, wherein before dividing the first image and the second image respectively into a plurality of sub-images, the method further comprises determining outlier pixel points in the first image and the second image and filtering out the outlier pixel points.

7.  The method according to claim 6, wherein determining outlier pixel points in the first image and the second image comprises:
    determining a plurality of pixel point error values of multiple pairs of matching pixel points in the first image and the second image; and determining the outlier pixel points in the multiple pairs of matching pixel points based on the plurality of pixel point error values.

8.  The method according to any one of claims 1-4, wherein correcting extrinsic parameters of the first camera and the second camera when it is determined that there is the calibration anomaly between the first camera and the second camera comprises:
    obtaining an initial rotation matrix corresponding to the first camera and the second camera using epipolar constraint;

and searching for a target disparity offset value within a preset disparity offset range using a grid search method for correcting the initial rotation matrix.

9. The method according to claim 8, wherein the preset disparity offset range includes n preset disparity offset values, and
searching for a target disparity offset value within a preset disparity offset range using a grid search method comprises:

for an ith preset disparity offset value, calculating coordinate information of multiple pixel points at two different time points;
for the ith preset disparity offset value, calculating an ith group of error values based on the coordinate information of the multiple pixel points at the two different time points, where i ranges from 1 to n; and
determining the target disparity offset value based on a distribution of a 1st to nth groups of error values.

10. The method according to claim 9, wherein for an ith preset disparity offset value, calculating coordinate information of multiple pixel points at two different time points comprises:

for the ith preset disparity offset value, calculating first coordinate information of the multiple pixel points at a first time point; and
determining second coordinate information of the multiple pixel points at a second time point based on relative pose information of a vehicle at the first and second time points and the first coordinate information.

11. The method according to claim 9, wherein determining the target disparity offset value based on a distribution of a 1st to nth groups of error values comprises:

determining a number of error values less than a preset error threshold among multiple error values in an mth group of error values, where m ranges from 1 to n, to obtain n error value counts; and
determining a preset disparity offset value corresponding to a maximum among the n error value counts as the target disparity offset value.

12. A computer device comprising a memory, a processor, and a computer program stored in the memory, wherein the processor executes the computer program to implement steps of the method according to any one of claims 1-11.

13. The computer device according to claim 12, wherein the processor executes the computer program to implement the following step:
generating a prompt message to remind a user when it is detected that an image captured by the first and/or second camera does not contain valid information.

14. The computer device according to claim 12 or 13, wherein the processor executes the computer program to implement the following step:
recording changes of the extrinsic parameters of the first camera and the second camera, and generating an extrinsic parameter change curve.

15. A computer-readable storage medium storing a computer program or instruction therein, wherein the computer program or instruction, when executed by a processor, implements steps of the method according to any one of claims 1-11.

16. A computer program product comprising a computer program or instruction, wherein the computer program or instruction, when executed by a processor, implements steps of the method according to any one of claims 1-11.

17. A mobile platform, wherein the mobile platform is equipped with a first camera, a second camera, and the computer device according to any one of claims 12-14.

18. The mobile platform according to claim 17, wherein the first camera and the second camera are mounted at the front of the mobile platform.

19. The mobile platform according to claim 17, wherein a baseline between the first camera and the second camera is determined based on a height and/or width of a detection object.

20. The mobile platform according to claim 17, wherein a baseline between the first camera and the second camera ranges from 0.2m to 1.2m, and a field of view of the first camera and the second camera is 120°.

Acquiring a first image captured by the first camera and a second image captured by the second camera — S10

Determining whether there is a calibration anomaly between the first camera and the second camera based on the first image and the second image — S20

Correcting extrinsic parameters of the first camera and the second camera when it is determined that there is the calibration anomaly between the first camera and the second camera — S30

FIG.1

FIG.2

Dividing the first image and the second image respectively into a plurality of sub-images ⌐ S21

Calculating a calibration error value corresponding to the first image and the second image based on an error between matching pixel points in a plurality of sub-images of the first image and a plurality of sub-images of the second image ⌐ S22

Determining that there is the calibration anomaly between the first camera and the second camera when the calibration error value exceeds a preset error threshold ⌐ S23

FIG.3

Sub-image Width

Sub-image Height

Image Height

Image Width

FIG.4

Obtaining an initial rotation matrix corresponding to the first camera and the second camera using epipolar constraint — S31

Searching for a target disparity offset value within a preset disparity offset range using a grid search method for correcting the initial rotation matrix — S32

FIG.5

For an ith preset disparity offset value, calculating coordinate information of multiple pixel points at two different time points — S321

For the ith preset disparity offset value, calculating an ith group of error values based on the coordinate information of the multiple pixel points at the two different time points — S322

Determining the target disparity offset value based on a distribution of a 1st to nth groups of error values — 323

FIG.6

FIG.7

FIG.8

FIG.9

4k distance measurement error characteristics of binocular camera with different baselines

- - - - - -baseline=0.18
————baseline=0.4

FIG.10

FIG.11

FIG.12

FIG.13

## INTERNATIONAL SEARCH REPORT

| International application No. |
| --- |
| **PCT/CN2024/107539** |

| A. | CLASSIFICATION OF SUBJECT MATTER |
| --- | --- |

G06T7/80(2017.01)i; G06T7/73(2017.01)i; G06T7/13(2017.01)i

According to International Patent Classification (IPC) or to both national classification and IPC

| B. | FIELDS SEARCHED |
| --- | --- |

Minimum documentation searched (classification system followed by classification symbols)

IPC: G06T

Documentation searched other than minimum documentation to the extent that such documents are included in the fields searched

Electronic data base consulted during the international search (name of data base and, where practicable, search terms used)

CNABS; CNTXT; ENTXTC; DWPI; WPABS; EPTXT; USTXT; WOTXT; CNKI: 标定, 对极约束, 分布, 矫正, 目标, 视差, 偏差值, 时刻, 时序, 双目, 网格, 搜索, 外参, 误差, 校正, 旋转矩阵, 异常, 坐标, calibration, epipolar constraint, distribution, correction, target, disparity, deviation value, timestamp, temporal sequence, stereo vision, grid, search, extrinsic parameter, error, rotation matrix, outlier, coordinate

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 117934631 A (GUANGDONG OPPO MOBILE TELECOMMUNICATIONS CORP., LTD.) 26 April 2024 (2024-04-26) description, paragraphs [0027]-[0255] | 1-8, 12-20 |
| Y | CN 117576221 A (ZHEJIANG GEELY AUTOMOBILE HOLDINGS LIMITED et al.) 20 February 2024 (2024-02-20) description, paragraphs [0047]-[0123] | 1-8, 12-20 |
| Y | CN 117882110 A (SZ DJI TECHNOLOGY CO., LTD.) 12 April 2024 (2024-04-12) description, paragraphs [0049]-[0117] | 1-8, 12-20 |
| A | CN 117934631 A (GUANGDONG OPPO MOBILE TELECOMMUNICATIONS CORP., LTD.) 26 April 2024 (2024-04-26) description, paragraphs [0027]-[0255] | 9-11 |
| A | CN 117576221 A (ZHEJIANG GEELY AUTOMOBILE HOLDINGS LIMITED et al.) 20 February 2024 (2024-02-20) description, paragraphs [0047]-[0123] | 9-11 |

| ✓ Further documents are listed in the continuation of Box C. | ✓ See patent family annex. |
| --- | --- |

| * | Special categories of cited documents: |
| --- | --- |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **13 November 2024** | **08 January 2025** |

| Name and mailing address of the ISA/CN | Authorized officer |
| --- | --- |
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2024/107539** |

**C.    DOCUMENTS CONSIDERED TO BE RELEVANT**

| Category* | Citation of document, with indication, where appropriate, of the relevant passages | Relevant to claim No. |
| --- | --- | --- |
| A | CN 117882110 A (SZ DJI TECHNOLOGY CO., LTD.) 12 April 2024 (2024-04-12) description, paragraphs [0049]-[0117] | 9-11 |
| A | CN 115272494 A (TENCENT TECHNOLOGY (SHENZHEN) CO., LTD.) 01 November 2022 (2022-11-01) entire document | 1-20 |
| A | CN 111145271 A (GUANGDONG BRIGHT DREAM ROBOTICS CO., LTD.) 12 May 2020 (2020-05-12) entire document | 1-20 |

Form PCT/ISA/210 (second sheet) (July 2022)

**INTERNATIONAL SEARCH REPORT**
Information on patent family members

International application No.

**PCT/CN2024/107539**

| Patent document cited in search report | | | Publication date (day/month/year) | Patent family member(s) | | | Publication date (day/month/year) |
|---|---|---|---|---|---|---|---|
| CN | 117934631 | A | 26 April 2024 | None | | | |
| CN | 117576221 | A | 20 February 2024 | None | | | |
| CN | 117882110 | A | 12 April 2024 | None | | | |
| CN | 115272494 | A | 01 November 2022 | CN | 115272494 | B | 30 December 2022 |
| CN | 111145271 | A | 12 May 2020 | CN | 111145271 | B | 28 April 2023 |

Form PCT/ISA/210 (patent family annex) (July 2022)